# EUROPEAN PATENT APPLICATION

(11) **EP 4 564 794 A1**
(43) Date of publication of application: **04.06.2025**
(21) Application number: 23893494.7
(22) Date of filing: 18.10.2023
(51) Int. Cl.: H04M 1/72454

(54) **SCREEN DISPLAY METHOD FOR TERMINAL DEVICE**

(30) Priority: 23.11.2022 CN 202211475893; 07.02.2023 CN 202310129195
(71) Applicant: Honor Device Co., Ltd., Shenzhen, Guangdong 518040 (CN)
(72) Inventor: LIANG, Xu, Shenzhen, Guangdong 518040 (CN); LI, Chenlong, Shenzhen, Guangdong 518040 (CN); LIU, Tieliang, Shenzhen, Guangdong 518040 (CN); SHI, Guoji, Shenzhen, Guangdong 518040 (CN)
(74) Representative: Gill Jennings & Every LLP
(86) International application number: PCT/CN2023/125280
(87) International publication number: WO 2024/109402

(57) **Abstract**

This application provides a screen display method for a terminal device, to implement drop protection on a gyroscope in a terminal device when the terminal device drops, thereby avoiding damage to the gyroscope, enabling inner and outer display screens to correctly perform interface display, and improving user experience. The method is applied to a terminal device including an inner display screen, an outer display screen, and a gyroscope, and includes: determining whether the terminal device is in a weightless state; when the terminal device is in a weightless state, disabling the gyroscope, and stopping executing a folding angle algorithm; re-enabling the gyroscope when the terminal device is no longer in a weightless state, and obtaining an angular velocity by using the gyroscope; executing the folding angle algorithm based on the angular velocity to obtain an unfolding angle of the inner display screen; and displaying a corresponding interface based on the unfolding angle of the inner display screen by using the inner display screen or the outer display screen.

## Description

This application claims priority to Chinese Patent Application No. 202211475893.6, filed with the China National Intellectual Property Administration on November 23, 2022 and entitled "DROP PROTECTION METHOD FOR TERMINAL DEVICE", and priority to Chinese Patent Application No. 202310129195.9, filed with the China National Intellectual Property Administration on February 7, 2023 and entitled "SCREEN DISPLAY METHOD FOR TERMINAL DEVICE", which are incorporated herein by reference in their entireties.

### TECHNICAL FIELD

This application relates to the field of terminal technologies, and in particular, to a screen display method for a terminal device.

### BACKGROUND

With development of terminal technologies, a foldable terminal device appears, and a plurality of display screens may be disposed on the terminal device. Display screens of an inward foldable terminal device may include an inner display screen and an outer display screen (briefly referred to as "inner and outer display screens"). In use, the terminal device determines, based on determining performed by a gyroscope of the terminal device on a status of the terminal device, a display screen for displaying an interface. A display status of the display screen is switched as the status of the terminal device changes. Specifically, the status of the terminal device may refer to an unfolding angle of the inner display screen of the terminal device. However, in actual use, the gyroscope inside the terminal device may be damaged due to dropping of the terminal device, which may result in a failure to switch between or an error during switching between interfaces displayed on the inner display screen and the outer display screen of the terminal device (briefly referred to as "non-switching or arbitrary switching between the inner and outer display screens"). Therefore, drop protection needs to be performed on the terminal device.

Currently, there is a screen display method for a terminal device. According to the method, when it is detected that a terminal device is in a dropping state, a corresponding intervention operation is performed, to prevent a screen of the terminal device from being cracked by impact of an external force. However, in this method, only the display screen of the terminal device is protected against damage, and protection of the gyroscope inside the terminal device is not considered. Consequently, the problem of non-switching or arbitrary switching between the inner and outer display screens that is caused by damage to the gyroscope cannot be avoided, affecting user experience.

### SUMMARY

This application provides a screen display method for a terminal device, to implement drop protection on a gyroscope in a terminal device when the terminal device drops, thereby avoiding damage to the gyroscope, enabling inner and outer display screens to correctly perform interface display, and improving user experience.

According to a first aspect, a screen display method for a terminal device is provided, and applied to a terminal device including an inner display screen, an outer display screen, and a gyroscope. The method includes: determining whether the terminal device is in a weightless state; when the terminal device is in a weightless state, disabling the gyroscope, and stopping executing a folding angle algorithm; re-enabling the gyroscope when the terminal device is no longer in a weightless state, and obtaining an angular velocity by using the gyroscope; executing the folding angle algorithm based on the angular velocity to obtain an unfolding angle of the inner display screen; and displaying a corresponding interface based on the unfolding angle of the inner display screen by using the inner display screen or the outer display screen.

According to the screen display method for a terminal device in this embodiment of this application, when the terminal device is in a weightless state, the terminal device powers off the gyroscope, that is, disables the gyroscope, and suspends the execution of the folding angle algorithm. This helps avoid incorrect interface display of the inner and outer display screens that occurs after the gyroscope is disabled. After a drop scenario ends, the gyroscope is powered on, that is, the gyroscope is enabled, and the folding angle algorithm is re-executed. In this way, drop protection can be implemented for the gyroscope in the terminal device when the terminal device drops, thereby avoiding damage to the gyroscope, enabling the inner and outer display screens to correctly perform interface display, and improving user experience.

With reference to the first aspect, in some implementations of the first aspect, the method further includes: after the gyroscope is disabled for first preset duration, determining whether the terminal device is still in a weightless state; and if the gyroscope is in a weightless state, prolonging disabled duration of the gyroscope and execution stop duration of the folding angle algorithm.

In this embodiment of this application, prolonging the disabled duration of the gyroscope helps avoid damage to an internal circuit of the gyroscope. Prolonging the execution stop duration of the folding angle algorithm can prevent the terminal device from executing the folding angle algorithm by using historical data reported by the gyroscope, which helps improve accuracy of folding angle calculation, and further helps correct interface display.

With reference to the first aspect, in some implementations of the first aspect, the execution stop duration of the folding angle algorithm is second preset duration, and the second preset duration is greater than or equal to the first preset duration.

In this embodiment of this application, the second preset duration is greater than or equal to the first preset duration, which can prevent an execution start moment of the folding angle algorithm from being earlier than an enabling moment of the gyroscope, and prevent the terminal device from obtaining an incorrect folding angle due to inability to obtain data reported by the gyroscope in real time because of the gyroscope being disabled, thereby avoiding interface display errors of the inner and outer display screens.

With reference to the first aspect, in some implementations of the first aspect, the re-enabling the gyroscope when the terminal device is no longer in a weightless state, and obtaining an angular velocity by using the gyroscope includes: re-enabling the gyroscope when the terminal device is not in a weightless state and is not in an overweight state, and obtaining the angular velocity by using the gyroscope.

In this embodiment of this application, the gyroscope is re-enabled when the terminal device is not in a weightless state and is not in an overweight state, which can avoid damage to the internal circuit of the gyroscope when the gyroscope drops due to weightlessness or drops due to weightlessness after being overweight.

With reference to the first aspect, in some implementations of the first aspect, the method further includes: after the terminal device is not in a weightless state, determining whether the terminal device is in an overweight state; and if the terminal device is in an overweight state, prolonging the disabled duration of the gyroscope and the execution stop duration of the folding angle algorithm.

In this embodiment of this application, if the terminal device is in an overweight state, the disabled duration of the gyroscope and the execution stop duration of the folding angle algorithm are prolonged, which helps avoid damage to the internal circuit of the gyroscope and helps correct interface display. To avoid repetition, details are not described herein again.

With reference to the first aspect, in some implementations of the first aspect, the method further includes: executing a posture algorithm based on the unfolding angle of the inner display screen, to obtain posture information of the inner display screen; and the displaying a corresponding interface based on the unfolding angle of the inner display screen by using the inner display screen or the outer display screen includes: displaying the corresponding interface based on the unfolding angle and the posture information of the inner display screen by using the inner display screen or the outer display screen.

With reference to the first aspect, in some implementations of the first aspect, the determining whether the terminal device is in a weightless state includes: obtaining data of three coordinate axes in a three-dimensional coordinate system; and if absolute values of differences between the data of the three coordinate axes and 0.5×*g* are all less than a preset value, determining that the terminal device is in a weightless state, where g indicates gravitational acceleration.

With reference to the first aspect, in some implementations of the first aspect, the determining whether the terminal device is in a weightless state includes: obtaining data of three coordinate axes in a three-dimensional coordinate system; and if the data of the three coordinate axes is all less than a first preset threshold, determining that the terminal device is in a weightless state.

According to a second aspect, another screen display method for a terminal device is provided, and applied to a terminal device including an inner display screen, an outer display screen, and a gyroscope. The method includes: determining whether the terminal device is in a weightless state; when the terminal device is in a weightless state, disabling the gyroscope; re-enabling the gyroscope when the terminal device is no longer in a weightless state, and obtaining an angular velocity by using the gyroscope; executing a folding angle algorithm based on the angular velocity to obtain an unfolding angle of the inner display screen; and displaying a corresponding interface based on the unfolding angle of the inner display screen by using the inner display screen or the outer display screen.

According to the screen display method for a terminal device in this embodiment of this application, when the terminal device is in a weightless state, the terminal device powers off the gyroscope, that is, disables the gyroscope. After a drop scenario ends, the gyroscope is powered on, that is, the gyroscope is enabled. In this way, drop protection can be implemented for the gyroscope in the terminal device when the terminal device drops, thereby avoiding damage to the gyroscope, and improving user experience.

According to a third aspect, still another screen display method for a terminal device is provided, and applied to a terminal device including an inner display screen, an outer display screen, and a gyroscope. The method includes: determining whether the terminal device is in a weightless state; when the terminal device is in a weightless state, stopping executing a folding angle algorithm; when the terminal device is no longer in a weightless state, obtaining an angular velocity by using the gyroscope; executing the folding angle algorithm based on the angular velocity to obtain an unfolding angle of the inner display screen; and displaying a corresponding interface based on the unfolding angle of the inner display screen by using the inner display screen or the outer display screen.

According to the screen display method for a terminal device in this embodiment of this application, when the terminal device is in a weightless state, the terminal device suspends the execution of the folding angle algorithm. This helps avoid incorrect interface display of the inner and outer display screens. After a drop scenario ends, the folding angle algorithm is re-executed. In this way, the inner and outer display screens can correctly perform interface display when the terminal device drops, improving user experience.

According to a fourth aspect, yet another screen display method for a terminal device is provided, and applied to a terminal device including an inner display screen, an outer display screen, and a magnetic sensor. The method includes: obtaining a magnetic force value between the inner display screen by using the magnetic sensor; determining posture information of the inner display screen based on the magnetic force value; and displaying a corresponding interface based on the posture information by using the inner display screen or the outer display screen.

In this embodiment of this application, the terminal device switches between the inner and outer display screens based on the magnetic sensor. The method is applicable to more scenarios. For example, the terminal device can still switch between the inner and outer display screens in a case of continuous weightlessness, thereby improving user experience.

With reference to the fourth aspect, in some implementations of the fourth aspect, the determining posture information of the inner display screen based on the magnetic force value includes: when the magnetic force value is greater than or equal to a fourth preset threshold, determining that the inner display screen is in a closed state; or when the magnetic force value is less than the fourth preset threshold, determining that the inner display screen is in an unfolded state.

With reference to the fourth aspect, in some implementations of the fourth aspect, the inner display screen is folded in a manner of inward folding or outward folding.

According to a fifth aspect, a terminal device is provided, including a processor and a memory, and the processor is configured to read instructions stored in the memory, to perform the method according to any one of the possible implementations of the foregoing various aspects.

Optionally, there are one or more processors, and there are one or more memories.

Optionally, the memory and the processor may be integrated, or the memory and the processor are separately disposed.

In a specific implementation process, the memory may be a non-transitory (non-transitory) memory, for example, a read-only memory (read only memory, ROM). The memory and the processor may be integrated on a same chip, or may be respectively disposed on different chips. A type of the memory and a manner of disposing the memory and the processor are not limited in embodiments of this application.

The terminal device in the fifth aspect may be a chip, and the processor may be implemented by using hardware or software. When being implemented by using hardware, the processor may be a logic circuit, an integrated circuit, or the like. When being implemented by using software, the processor may be a general-purpose processor, and is implemented by reading software code stored in the memory. The memory may be integrated into the processor, or may be located outside the processor and exist independently.

According to a sixth aspect, a computer program product is provided. The computer program product includes a computer program (which may also be referred to as code or instructions), and when the computer program is run, a computer is enabled to perform the method according to any one of the possible implementations of the foregoing various aspects.

According to a seventh aspect, a computer-readable storage medium is provided. The computer-readable storage medium stores a computer program (which may also be referred to as code or instructions), and when the computer program is run on a computer, the computer is enabled to perform the method according to any one of the possible implementations of the foregoing various aspects.

### BRIEF DESCRIPTION OF DRAWINGS

FIG. 1 is a schematic diagram of a partial circuit structure of a gyroscope according to an embodiment of this application;
FIG. 2 is a schematic diagram of a partial circuit structure of another gyroscope according to an embodiment of this application;
FIG. 3 is a schematic diagram of a mobile phone with inner and outer display screens according to an embodiment of this application;
FIG. 4 is a schematic flowchart of a screen display method for a terminal device according to an embodiment of this application;
FIG. 5A and FIG. 5B are a schematic flowchart of another screen display method for a terminal device according to an embodiment of this application;
FIG. 6A and FIG. 6B are a schematic flowchart of still another screen display method for a terminal device according to an embodiment of this application;
FIG. 7 is a schematic flowchart of yet another screen display method for a terminal device according to an embodiment of this application; and
FIG. 8 is a schematic block diagram of a terminal device according to an embodiment of this application.

### DESCRIPTION OF EMBODIMENTS

The following describes the technical solutions in this application with reference to the accompanying drawings.

To clearly describe the technical solutions in the embodiments of this application, in the embodiments of this application, words such as "first" and "second" are used to distinguish between same items or similar items with basically the same functions and effects. A person skilled in the art may understand that the words such as "first" and "second" do not limit a quantity or an execution sequence, and the words such as "first" and "second" do not indicate a definite difference.

It should be noted that in this application, words such as "example" or "for example" are used to indicate an example, an illustration, or a description. Any embodiment or design solution described as "example" or "for example" in this application should not be construed as being preferred or advantageous over other embodiments or design solutions. Exactly, use of the words such as "example" or "for example" is intended to present a related concept in a specific manner.

Moreover, "at least one" means one or more, and "a plurality of" means two or more. The term "and/or" describes an association relationship between associated objects, and indicates that three relationships may exist. For example, "A and/or B" may indicate the following cases: Only A exists, both A and B exist, and only B exists, where A and B may be singular or plural. The character "/" usually indicates an "or" relationship between associated objects. "At least one of the following items" or a similar expression means any combination of these items, including a single item or any combination of a plurality of items. For example, "at least one of a, b, and c" may indicate a, b, c, a and b, a and c, b and c, or a, b, and c, where a, b, and c may be singular or plural.

A terminal device in the embodiments of this application is a device with inner and outer display screens, and may be a mobile phone, a tablet computer, a personal computer (personal computer, PC), a smart screen, an artificial intelligence (artificial intelligence, AI) speaker, a headset, an in-vehicle infotainment device, or a wearable terminal device such as a smartwatch, or may be various teaching aids (for example, a learning machine and an early education machine), a smart toy, a portable robot, a personal digital assistant (personal digital assistant, PDA), an augmented reality (augmented reality, AR) device, a virtual reality (virtual reality, VR) device, or the like, or may be a device having a mobile office function, a device having a smart household function, a device having an audio/video entertainment function, a device supporting smart travel, or the like. It should be understood that a specific technology and a specific device form used by the terminal device are not limited in the embodiments of this application.

With development of terminal technologies, a foldable terminal device appears, and a plurality of display screens may be disposed on the terminal device. Display screens of an inward foldable terminal device may include an inner display screen and an outer display screen. The inner display screen may be an inward foldable display screen, and the outer display screen may be a half non-foldable display screen, a fully non-foldable display screen, a half foldable display screen, a fully foldable display screen, or the like. This is not limited in the embodiments of this application.

When the inner display screen is closed and in a folded state, the outer display screen of the terminal device is turned on and displays an interface, and the inner display screen is in a screen-off state. When the inner display screen is in an unfolded state, the inner display screen of the terminal device is turned on and displays an interface, and the outer display screen is in a screen-off state. In a use process of the terminal device, the terminal device determines, based on determining performed by a gyroscope of the terminal device on a status of the terminal device, a display screen for displaying an interface. A display status of the display screen is switched as the status of the terminal device changes. Specifically, the status of the terminal device may refer to an unfolding angle of the inner display screen of the terminal device. However, in actual use, the gyroscope inside the terminal device may be damaged due to dropping of the terminal device, which may result in a failure to switch between or an error during switching between interfaces displayed on the inner display screen and the outer display screen (briefly referred to as "non-switching or arbitrary switching between the inner and outer display screens"). Therefore, drop protection needs to be performed on the terminal device.

Currently, there is a screen display method for a terminal device. According to the method, when it is detected that a terminal device is in a dropping state, a corresponding intervention operation is performed by using a dropping form of the terminal device during dropping and a screen type of the terminal device, to avoid a problem that a screen of the terminal device is cracked by impact of an external force such as a mechanical force. However, in this method, only the display screen of the terminal device is protected against damage, and protection of the gyroscope inside the terminal device is not considered. In other words, in this method, damage to an internal circuit part of the gyroscope that may be caused by dropping of the terminal device is not considered. In this method, the following problem is not considered, either: If the gyroscope is damaged when the terminal device drops, non-switching or arbitrary switching between the inner and outer display screens occurs, affecting user experience.

To resolve the foregoing problem, this application provides a screen display method for a terminal device. When the terminal device is in a dropping state, the terminal device disables a gyroscope, to avoid damage to an internal circuit part of the gyroscope that is caused by resonance generated between an internal operating frequency of the gyroscope and an impact frequency existing when the electronic device collides. In addition, the terminal device further suspends display of inner and outer display screens. After the terminal device is not in a dropping state, the gyroscope is enabled again, and the inner and outer display screens re-display an interface. This helps improve drop protection efficiency when the terminal device drops, ensures normal display of the inner and outer display screens, and improves user experience.

It should be further understood that when the gyroscope is powered on and operates, an internal voltage of the gyroscope is relatively high, and there is a relatively large potential difference between a movable part and a detection electrode of a microelectro mechanical systems (microelectro mechanical systems, MEMS). When the terminal device drops and is subject to collision, a collision deformation may cause contact between the movable part and the detection electrode of the MEMS, causing the circuit to be short-circuited, and further causing damage to the internal circuit part of the gyroscope. Disabling the gyroscope means powering off the gyroscope, and may also be understood as enabling the gyroscope not to be in a high-voltage state inside or enabling the gyroscope to enter a sleep state. Therefore, in the embodiments of this application, when the terminal device is in a dropping state, the gyroscope is disabled, to avoid damage to the gyroscope, and specifically, to avoid damage to the internal circuit of the gyroscope.

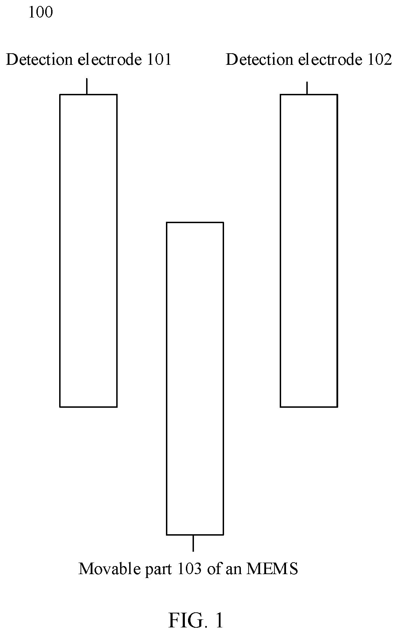

FIG. 1 schematically shows a partial circuit structure 100 of a gyroscope. As shown in FIG. 1, a movable part 103 of an MEMS may move up and down. During operation, there is a relatively large potential difference between the part and a detection electrode 101 or a detection electrode 102. When a terminal device drops and is subject to collision, because of a collision deformation, there may be contact between the movable part 103 of the MEMS and the detection electrode 101 on a left side or between the movable part 103 of the MEMS and the detection electrode 102 on a right side, causing a circuit to be short-circuited, and further causing damage to an internal circuit part of the gyroscope. Therefore, when the terminal device is in a dropping state, the gyroscope is powered off, thereby avoiding damage to the internal circuit of the gyroscope.

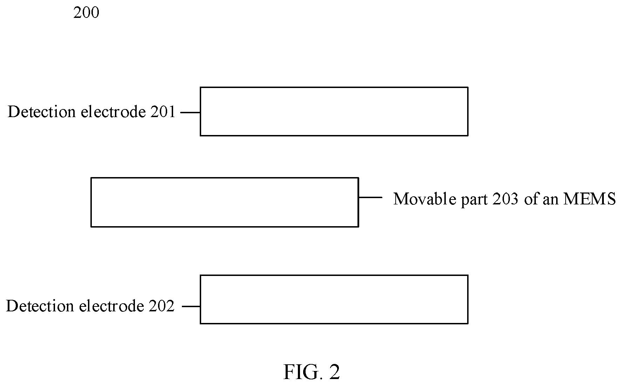

FIG. 2 schematically shows a partial circuit structure 200 of a gyroscope. As shown in FIG. 2, a movable part 203 of an MEMS may move left and right. During operation, there is a relatively large potential difference between the part and a detection electrode 201 or a detection electrode 202. When a terminal device drops and is subject to collision, because of a collision deformation, there may be contact between the movable part 203 of the MEMS and the detection electrode 202 on a lower side or between the movable part 203 of the MEMS and the detection electrode 201 on an upper side, causing a circuit to be short-circuited, and further causing damage to an internal circuit part of the gyroscope. Therefore, when the terminal device is in a dropping state, the gyroscope is powered off, thereby avoiding damage to the internal circuit of the gyroscope.

The following describes, by using an example in which the terminal device is a mobile phone, the terminal device with inner and outer display screens in the embodiments of this application.

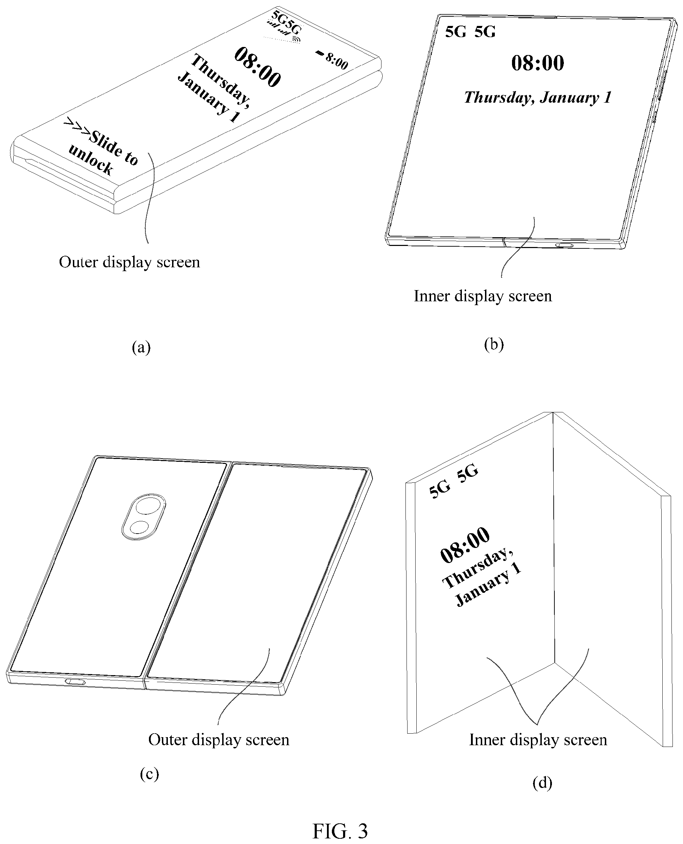

FIG. 3 is a schematic diagram of a mobile phone with inner and outer display screens according to an embodiment of this application. The mobile phone has a left side and a right side. The two sides may rotate relative to each other around a rotating shaft in the middle to close and unfold. In addition, the mobile phone has an inner display screen and an outer display screen, the inner display screen is a foldable display screen, and the outer display screen is a fully non-foldable display screen. As shown in a in FIG. 3, when the two sides of the mobile phone are closed and in a folded state, that is, when the inner display screen is folded, the outer display screen of the mobile phone is turned on and displays an interface, and the inner display screen is in a screen-off state. As shown in b and c in FIG. 3, when the two sides of the mobile phone are unfolded, that is, an unfolding angle of the inner display screen is 180 degrees, the inner display screen of the mobile phone is turned on and displays an interface, and the outer display screen is in a screen-off state. As shown in d in FIG. 3, in a process of a transition of the two sides of the mobile phone from a folded state to an unfolded state, when an unfolding angle of the inner display screen is greater than or equal to 45 degrees, the inner display screen of the terminal device changes from a screen-off state to a screen-on display interface, and the outer display screen changes from a screen-on display interface to a screen-off state.

The following describes the screen display method for a terminal device in the embodiments of this application. The method may be applied to a drop scenario of a terminal device. The method is performed by a terminal device with inner and outer display screens.

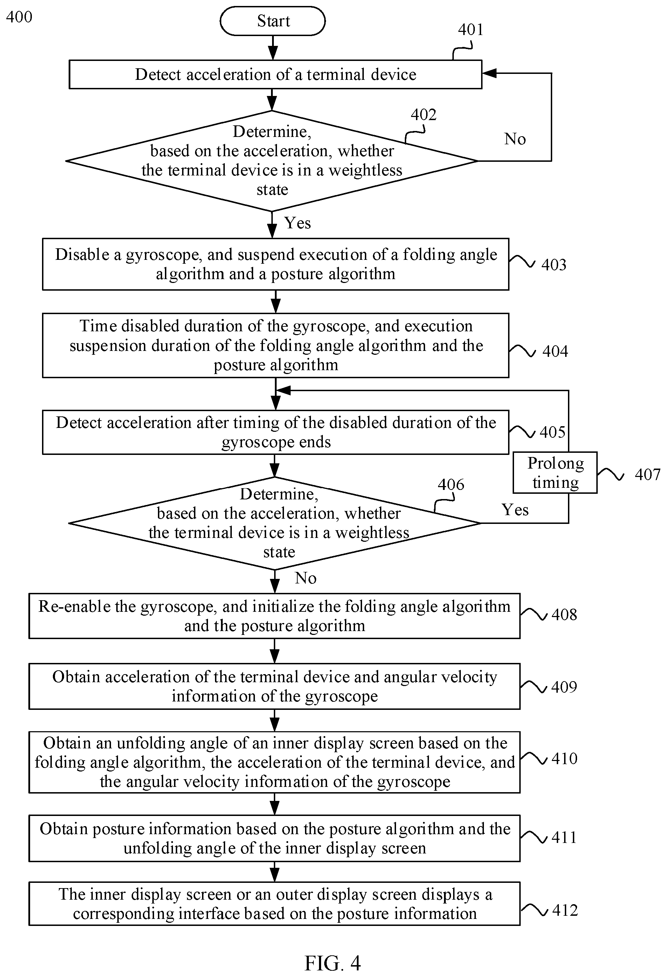

FIG. 4 is a schematic flowchart of a screen display method 400 for a terminal device according to an embodiment of this application. The method 400 includes the following steps.

S401: Detect acceleration of the terminal device.

For example, the acceleration of the terminal device may be detected based on an acceleration sensor.

S402: Determine, based on the acceleration of the terminal device, whether the terminal device is in a weightless state. If the terminal device is not in a weightless state, S401 continues to be performed.

In a possible implementation, in an established three-dimensional coordinate system, the acceleration of the terminal device has acceleration components on three coordinate axes. It may be determined, based on the three acceleration components, whether the terminal device is in a weightless state. Optionally, the three acceleration components of the acceleration of the terminal device are separately compared with a first preset threshold. If all the three acceleration components are less than the first preset threshold, it is determined that the terminal device is in a weightless state. For example, the first preset threshold may be any one of 0.4×g~0.6×g (g indicates gravitational acceleration, which is usually 9.8 m/s²). Optionally, the foregoing three acceleration components may be separately compared with 0.5×*g*. If all the three acceleration components are close to 0.5×*g*, the terminal device is in a weightless state.

Optionally, after it is determined, for a plurality of consecutive times, whether the terminal device is in a weightless state, it may be determined that the terminal device is in a weightless state. For example, if it is determined that the terminal device is in a weightless state at a first moment, and it is also determined that the terminal device is in a weightless state at a second moment thereafter, it is determined that the terminal device is in a weightless state, thereby preventing incorrect determining. Duration between the first moment and the second moment is not limited.

If it is determined that the terminal device is in a weightless state, S403 is performed: Disable a gyroscope, and suspend execution of a folding angle algorithm and a posture algorithm.

It should be understood that, in the terminal device with inner and outer display screens, the gyroscope includes a primary gyroscope and a secondary gyroscope. The gyroscope in this embodiment of this application is a general name of the primary gyroscope and the secondary gyroscope. The gyroscope may report angular velocity information to a processor, and the processor executes the folding angle algorithm and the posture algorithm based on the angular velocity information.

For example, the gyroscope may be a gyroscope sensor. In the terminal device with inner and outer display screens, the gyroscope sensor includes a primary gyroscope sensor and a secondary gyroscope sensor.

It should be further understood that, disabling the gyroscope in this embodiment of this application may be disabling only the primary gyroscope, or may be disabling only the secondary gyroscope, or may be disabling both the primary gyroscope and the secondary gyroscope. This is not limited in this embodiment of this application.

S404: Start a first timer, and time disabled duration of the gyroscope, and also start a second timer, and time execution suspension duration of the folding angle algorithm and the posture algorithm. Timing duration of the first timer is first preset duration, timing duration of the second timer is second preset duration, and the second preset duration is greater than or equal to the first preset duration.

It should be understood that, in this embodiment of this application, the disabled duration of the gyroscope is the first preset duration, and the execution suspension duration of the folding angle algorithm and the posture algorithm is the second preset duration.

Optionally, the disabled duration of the gyroscope depends on the drop scenario. Therefore, the first preset duration may be set based on the drop scenario.

It should be understood that the foregoing drop scenario may be that the terminal device directly drops on a plane (for example, the ground), or drops on an object first and then drops on a plane, or drops on a plane and then bounces off the plane, and then drops on the plane again. That the terminal device drops on an object first and then drops on a plane, or drops on a plane and then bounces off the plane, and then drops on the plane again is referred to as "secondary dropping".

For example, the first preset duration may be set to 1~2s, and the second preset duration may be set to 1.1~2.1s. Specifically, if disabled time of the gyroscope is set to 1s, disabled time of the folding angle algorithm and the posture algorithm may be set to 1.1s. When an initial velocity of the terminal device is zero, according to *h = gt*²/2 (where *t* indicates a dropping time, and *h* indicates a dropping height), during a period of 1s in which the gyroscope is disabled, the terminal device can drop from a maximum height of 4.9 m while remaining in a disabled state during the entire dropping. In addition, a dropping height in a common free drop scenario does not exceed 2 m. Therefore, the foregoing preset duration can ensure that all of the gyroscope of the terminal device, the folding angle algorithm, and the posture algorithm are in a disabled state in a process of the common drop scenario.

S405: When the first timer expires, detect acceleration.

Specifically, when the first timer expires, it indicates that the drop scenario has ended. The terminal device may detect the acceleration again, to ensure that the terminal device is not in a weightless state, thereby preventing the terminal device from secondary dropping.

In a possible implementation, after determining that the terminal device is in a weightless state in S402, the terminal device stops detecting the acceleration, and then starts to detect the acceleration after the first timer expires in S405, to determine whether the terminal device is still in a weightless state.

In another possible implementation, the terminal device continually detects the acceleration throughout the whole process, to detect, in real time throughout the whole process, whether the terminal device is in a weightless state.

S406: Determine, based on the acceleration, whether the terminal device is in a weightless state.

A determining method in this step is the same as the foregoing determining method in S402. Details are not described herein again. If the terminal device is in a weightless state, S407 is performed. If the terminal device is not in a weightless state, S408 is performed.

S407: If the terminal device is in a weightless state, prolong timing, that is, prolong the duration of the first timer and the second timer. For example, the duration may be prolonged by 1s. After timing is prolonged, S405 is performed.

S408: After the terminal device is not in a weightless state, re-enable the gyroscope, and initialize the folding angle algorithm and the posture algorithm.

It should be understood that, after re-enabling the gyroscope, the terminal device needs to re-execute the folding angle algorithm and the posture algorithm. When the terminal device re-executes the folding angle algorithm and the posture algorithm, the terminal device needs to initialize the folding angle algorithm and the posture algorithm (for example, the terminal device may clear existing parameters in the folding angle algorithm and the posture algorithm), to prevent the processor from using a historical angular velocity reported by the gyroscope to the processor (namely, an angular velocity reported to the processor before the gyroscope is disabled) to continue executing the algorithm.

S409: Obtain new acceleration and angular velocity information of the gyroscope after the terminal device enables the gyroscope.

It should be understood that the angular velocity information of the gyroscope includes a first angular velocity of the primary gyroscope and a second angular velocity of the secondary gyroscope, and the first angular velocity is different from the second angular velocity.

S410: Obtain an unfolding angle of the inner display screen of the terminal device based on the folding angle algorithm, the new acceleration of the terminal device, the first angular velocity, and the second angular velocity.

It should be understood that, the new acceleration of the terminal device, the first angular velocity of the primary gyroscope, and the second angular velocity of the secondary gyroscope are input to the folding angle algorithm, and the unfolding angle of the inner display screen of the terminal device can be obtained.

S411: Obtain posture information based on the unfolding angle of the inner display screen and the posture algorithm.

Specifically, the terminal device inputs the unfolding angle of the inner display screen of the terminal device to the posture algorithm to obtain the posture information.

It should be understood that the posture information indicates an unfolding status of the inner display screen of the terminal device. For example, the posture information is 1, indicating that the inner display screen is folded. The posture information is 2, indicating that the inner display screen is in any state between a folded state and a fully unfolded state. The posture information is 3, indicating that the inner display screen is in a fully unfolded state.

S412: The inner display screen or the outer display screen displays a corresponding interface based on the posture information.

In an optional manner, the terminal device may perform display in combination with the posture information and the unfolding angle of the inner display screen. For example, when the posture information is 1, the outer display screen of the terminal device displays the corresponding interface, and the inner display screen is in a screen-off state. When the posture information is 2 and the unfolding angle of the inner display screen is greater than or equal to a second preset threshold, the inner display screen of the terminal device displays the corresponding interface, and the outer display screen is in a screen-off state. When the posture information is 2 and the unfolding angle of the inner display screen is less than the second preset threshold, the outer display screen of the terminal device displays the corresponding interface, and the inner display screen is in a screen-off state. When the posture information is 3, the inner display screen of the terminal device displays the corresponding interface, and the outer display screen is in a screen-off state. The second preset threshold may be any one of 0~180 degrees, and the second preset threshold does not include 0 degrees or 180 degrees.

It should be understood that the posture algorithm and S409 may be optional steps, and the inner and outer display screens of the terminal device may directly display the corresponding interface based on the unfolding angle of the inner display screen. For example, when the unfolding angle is less than the second preset threshold, the outer display screen of the terminal device displays the corresponding interface, and the inner display screen is in a screen-off state. When the unfolding angle is greater than or equal to the second preset threshold, the inner display screen of the terminal device displays the corresponding interface, and the outer display screen is in a screen-off state.

According to the screen display method for a terminal device in this embodiment of this application, when the terminal device is in a weightless state, the terminal device powers off the gyroscope, that is, disables the gyroscope, and suspends the execution of the folding angle algorithm and the posture algorithm. This helps avoid incorrect interface display of the inner and outer display screens that occurs after the gyroscope is disabled. After the drop scenario ends, the gyroscope is powered on, that is, the gyroscope is enabled, and the folding angle algorithm and the posture algorithm are re-executed. In this way, drop protection can be implemented for the gyroscope in the terminal device when the terminal device drops, thereby avoiding damage to the gyroscope, enabling the inner and outer display screens to correctly perform interface display, and improving user experience.

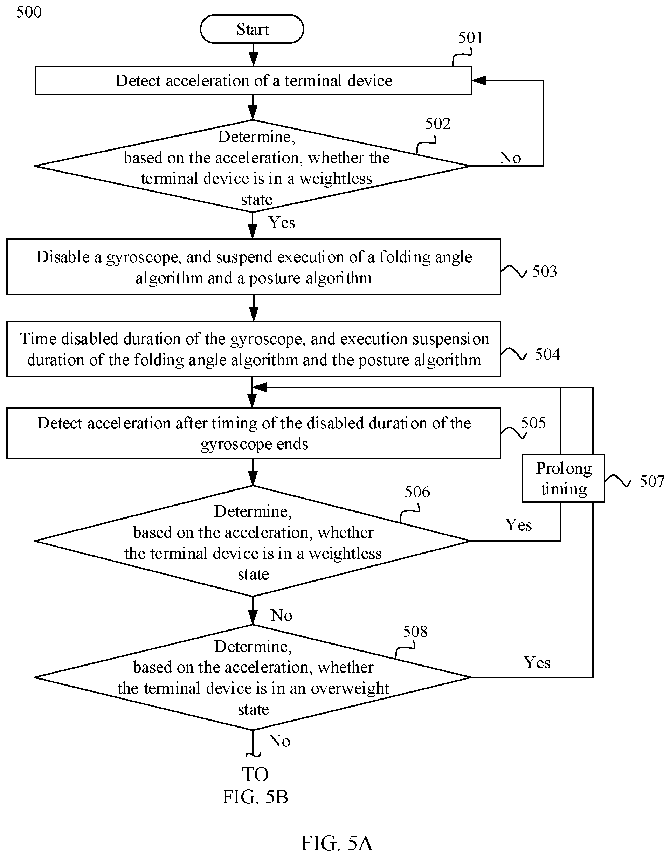

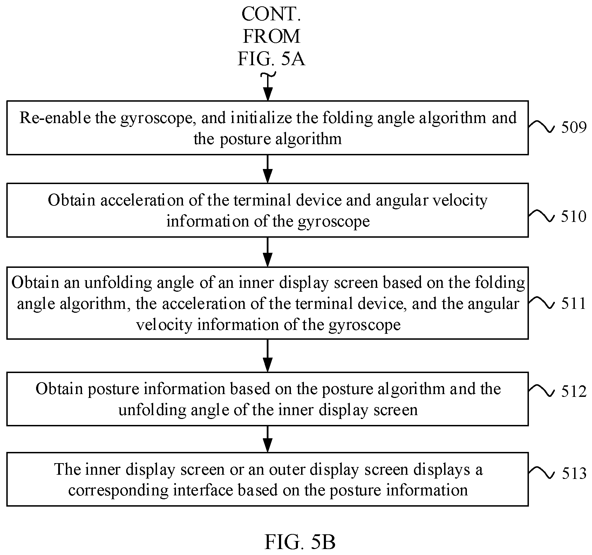

FIG. 5A and FIG. 5B are a schematic flowchart of another screen display method 500 for a terminal device according to an embodiment of this application. The method 500 includes the following steps.

S501~S507 are the same as S401~S407 in the foregoing method 400. Details are not described herein again.

S508: Determine, based on the acceleration, whether the terminal device is in an overweight state.

In a possible implementation, in an established three-dimensional coordinate system, the acceleration of the terminal device has acceleration components on three coordinate axes. The acceleration components, on the three coordinate axes, of the acceleration of the terminal device are separately compared with a third preset threshold. If an acceleration component of at least one of the three coordinate axes is greater than the third preset threshold, the terminal device is in an overweight state. For example, the third preset threshold may be g (g indicates gravitational acceleration, which is usually 9.8 m/s²).

If the terminal device is in an overweight state, S507 is performed, and timing is prolonged, that is, the duration of the first timer and the second timer is prolonged. For example, the duration may be prolonged by 1s. After timing is prolonged, S505 is performed.

S509~S513 are the same as S408~S412 in the foregoing method 400. Details are not described herein again.

The method 500 differs from the foregoing method 400 in that a step of determining whether the terminal device is in an overweight state is added. An overweight state scenario may be that the terminal device drops and bounces. If the terminal device is in an overweight state after the timer expires, the terminal device may prolong time of the timer, and wait for a period of time (for example, 1s). Thereafter, when the terminal device is neither in an overweight state nor in a weightless state, the terminal device enables the gyroscope, and executes the folding angle algorithm and the posture algorithm.

In this way, a scenario of secondary dropping of the terminal device can be covered, to better protect the gyroscope in the terminal device, thereby avoiding damage to the gyroscope, enabling the inner and outer display screens to correctly perform interface display, and improving user experience.

It should be understood that an execution sequence of S506 and S508 is merely an example. In another possible implementation, the terminal device may first perform S508, and then perform S506, or simultaneously perform S506 and S508. This is not limited in this embodiment of this application.

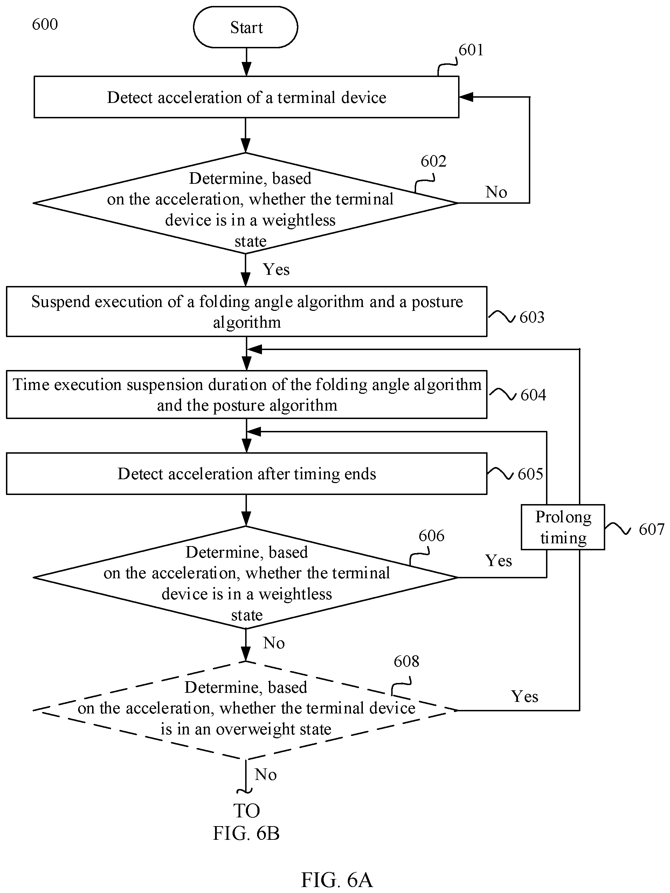

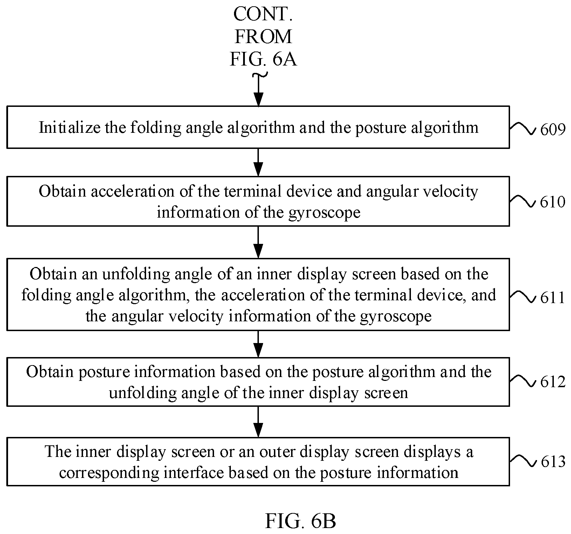

FIG. 6A and FIG. 6B are a schematic flowchart of another screen display method 800 for a terminal device according to an embodiment of this application. The method 800 includes the following steps.

S601: Detect acceleration of the terminal device.

For example, the acceleration of the terminal device may be detected based on an acceleration sensor.

S602: Determine, based on the acceleration of the terminal device, whether the terminal device is in a weightless state, and if the terminal device is not in a weightless state, continue to perform S601.

S603: If the terminal device is in a weightless state, suspend execution of a folding angle algorithm and a posture algorithm.

S604: Start a second timer, and time execution suspension duration of the folding angle algorithm and the posture algorithm.

S605: When the foregoing second timer expires, detect acceleration.

In a possible implementation, after determining that the terminal device is in a weightless state in S602, the terminal device stops detecting the acceleration, and then starts to detect the acceleration after the first timer expires in S605, to determine whether the terminal device is still in a weightless state.

In another possible implementation, the terminal device continually detects the acceleration throughout the whole process, to detect, in real time throughout the whole process, whether the terminal device is in a weightless state.

S606: Determine, based on the foregoing acceleration, whether the terminal device is in a weightless state.

If the terminal device is in a weightless state, S607 is performed. If the terminal device is not in a weightless state, S608 is performed.

Optionally, after it is determined, for a plurality of consecutive times, whether the terminal device is in a weightless state, it may be determined that the terminal device is in a weightless state. To avoid repetition, details are not described herein.

S607: If the terminal device is in a weightless state, prolong timing, that is, prolong duration of the second timer. For example, the duration may be prolonged by 1s. After timing is prolonged, S605 is performed.

Optionally, S608 is performed: Determine, based on the acceleration, whether the terminal device is in an overweight state.

If the terminal device is in an overweight state, S607 is performed, and timing is prolonged, that is, the duration of the foregoing second timer is prolonged. For example, the duration may be prolonged by 1s. After timing is prolonged, S605 is performed.

If the terminal device is not in an overweight state, S609 is performed.

S609: Initialize the folding angle algorithm and the posture algorithm.

S610: Obtain new acceleration and angular velocity information of a gyroscope after the terminal device enables the gyroscope.

S611: Obtain an unfolding angle of an inner display screen of the terminal device based on the folding angle algorithm, the new acceleration of the terminal device, a first angular velocity, and a second angular velocity.

S612: Obtain posture information based on the unfolding angle of the inner display screen and the posture algorithm.

S613: The inner display screen or an outer display screen displays a corresponding interface based on the posture information.

It should be understood that for relevant specific details of this embodiment of this application, reference may be made to the foregoing method 400 and method 500. Details are not described herein again.

According to the screen display method for a terminal device in this embodiment of this application, when the terminal device is in a weightless state, the terminal device suspends the execution of the folding angle algorithm and the posture algorithm. This helps avoid incorrect interface display of the inner and outer display screens. After a drop scenario ends, the folding angle algorithm and the posture algorithm are re-executed. In this way, the inner and outer display screens can correctly perform interface display when the terminal device drops, improving user experience.

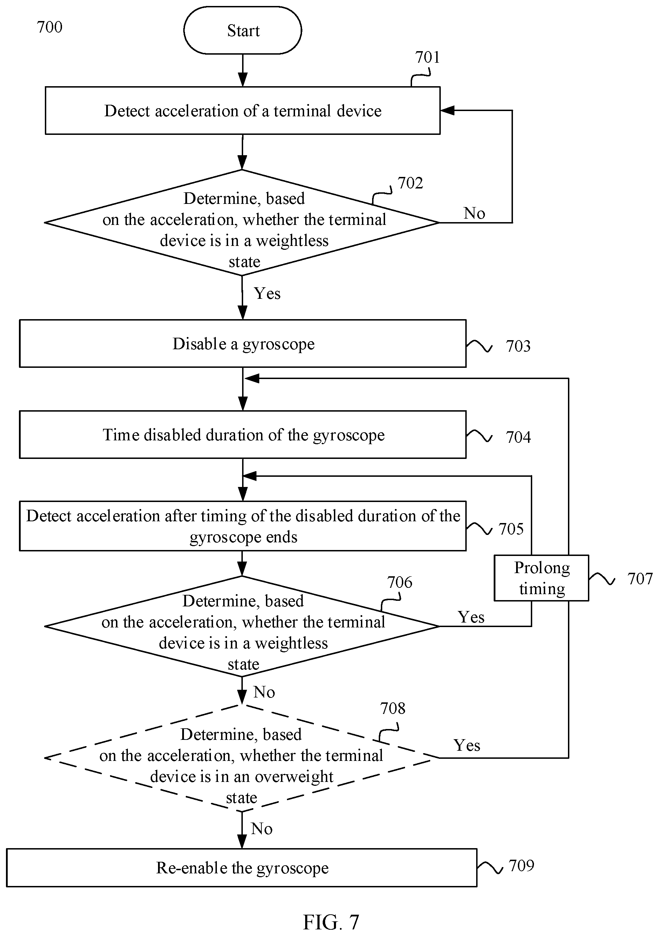

FIG. 7 is a schematic flowchart of another screen display method 700 for a terminal device according to an embodiment of this application. The method 700 includes the following steps.

S701: Detect acceleration of the terminal device.

S702: Determine, based on the acceleration of the terminal device, whether the terminal device is in a weightless state, and if the terminal device is not in a weightless state, continue to perform S701.

S703: If the terminal device is in a weightless state, disable a gyroscope.

S704: Start a first timer, and time disabled duration of the gyroscope.

S705: When the first timer expires, detect acceleration.

S706: Determine, based on the acceleration, whether the terminal device is in a weightless state.

If the terminal device is in a weightless state, S707 is performed. If the terminal device is not in a weightless state, S708 is performed.

S707: If the terminal device is in a weightless state, prolong timing, that is, prolong duration of the first timer. For example, the duration may be prolonged by 1s. After timing is prolonged, S705 is performed.

Optionally, S708 is performed: Determine, based on the acceleration, whether the terminal device is in an overweight state.

If the terminal device is in an overweight state, S707 is performed, and timing is prolonged, that is, the duration of the first timer is prolonged. For example, the duration may be prolonged by 1s. After timing is prolonged, S705 is performed.

If the terminal device is not in an overweight state, S709 is performed.

S709: Re-enable the gyroscope.

It should be understood that for relevant specific details of this embodiment of this application, reference may be made to the foregoing method 400 and method 500. Details are not described herein again.

According to the screen display method for a terminal device in this embodiment of this application, when the terminal device is in a weightless state, the terminal device powers off the gyroscope, that is, disables the gyroscope. After a drop scenario ends, the gyroscope is powered on, that is, the gyroscope is enabled. In this way, drop protection can be implemented for the gyroscope in the terminal device when the terminal device drops, thereby avoiding damage to the gyroscope, and improving user experience.

It should be understood that in the foregoing example, the terminal device detects the acceleration of the terminal device by using an acceleration sensor. If the acceleration sensor is damaged or the terminal device is in a continuous weightless state in a space scenario, the terminal device may use a magnetic sensor to switch between inner and outer screens.

Specifically, the terminal device may first obtain a magnetic force value between the inner display screen by using the magnetic sensor, then determine posture information of the inner display screen of the terminal device based on the magnetic force value, and switch between the inner and outer display screens based on the posture information, to display a corresponding interface.

It should be understood that the magnetic force value changes with a folding included angle of the inner display screen of the terminal device. When the folding included angle becomes smaller, the magnetic sensor is affected by stronger magnetism, and the magnetic force value becomes larger. When the folding included angle of the inner display screen becomes larger, the magnetic sensor is affected by weaker magnetism, and the magnetic force value becomes smaller. A specific magnetic force value threshold may be set. When the magnetic force value is greater than or equal to the preset threshold, the outer display screen displays a corresponding interface. When the magnetic force value is less than the preset threshold, the inner display screen displays a corresponding interface.

For example, when the magnetic force value is greater than or equal to a fourth preset threshold, a magnetic field around the magnetic sensor becomes strong, the folding included angle of the inner display screen of the terminal device is small, and a threshold for a closed state is met. In this case, the inner display screen of the terminal device is in a closed state. When the magnetic force value is less than the fourth preset threshold, a magnetic field around the magnetic sensor becomes weak, the folding included angle of the inner display screen of the terminal device is large, and a threshold for an unfolded state is met. In this case, the inner display screen of the terminal device is in an unfolded state.

It should be understood that the posture information in the method and the posture information in the foregoing method 600 are determined based on different manners. Based on the posture information, switching between the inner and outer display screens to display the corresponding interface is similar to that in the foregoing method 600. Details are not described herein again.

In this embodiment of this application, the terminal device switches between the inner and outer display screens based on the magnetic sensor. The method is applicable to more scenarios. For example, the terminal device can still switch between the inner and outer display screens in a case of continuous weightlessness, thereby improving user experience.

Optionally, the inner display screen of the terminal device may be folded in a manner of inward folding or outward folding.

It should be understood that inward folding may include transverse folding and longitudinal folding, and outward folding may also include transverse folding and longitudinal folding. This is not limited in this embodiment of this application. The transverse folding may be understood as folding along a long axis of the terminal device, and the longitudinal folding may be understood as folding along a short axis of the terminal device, for example, the terminal device is folded in a direction of the short axis.

It should be further understood that sequence numbers of the steps do not mean execution sequences. The execution sequences of the steps should be determined based on functions and internal logic of the steps, and should not be construed as any limitation on the implementation processes of the embodiments of this application.

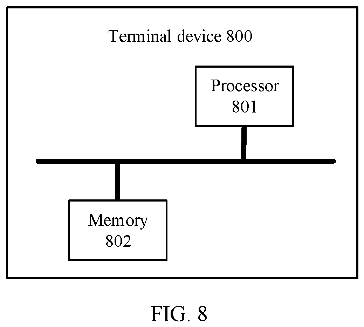

FIG. 8 shows a terminal device 800 according to an embodiment of this application. The terminal device 800 includes a processor 801 and a memory 802. The processor 801 and the memory 802 communicate with each other through an internal connection path. The memory 802 is configured to store instructions. The processor 801 is configured to execute the instructions stored in the memory 802.

It should be understood that the terminal device 800 may be specifically the terminal device in the foregoing embodiments, and may be configured to perform the steps and/or the procedures corresponding to the terminal device in the foregoing method embodiments. Optionally, the memory 802 may include a read-only memory and a random access memory, and provides instructions and data to the processor. A part of the memory may further include a nonvolatile random access memory. For example, the memory may further store information about a device type. The processor 801 may be configured to execute the instructions stored in the memory, and when the processor 801 executes the instructions stored in the memory 802, the processor 801 is configured to perform the steps and/or the procedures corresponding to the terminal device in the foregoing method embodiments.

It should be understood that in this embodiment of this application, the processor may be a central processing unit (central processing unit, CPU), and the processor may alternatively be another general-purpose processor, a digital signal processor (DSP), an application-specific integrated circuit (ASIC), a field programmable gate array (FPGA), another programmable logic device, a discrete gate, a transistor logic device, a discrete hardware component, or the like. The general-purpose processor may be a microprocessor, or the processor may be any conventional processor or the like.

In an implementation process, the steps of the foregoing method may be completed by using an integrated logic circuit of hardware in the processor or by using instructions in a form of software. The steps of the method disclosed with reference to the embodiments of this application may be directly performed by a hardware processor, or by a combination of hardware in the processor and a software module. The software module may be located in a storage medium that is mature in the art, for example, a random access memory, a flash memory, a read-only memory, a programmable read-only memory, an electrically erasable programmable memory, or a register. The storage medium is located in the memory. The processor executes the instructions in the memory, and completes the steps of the foregoing method in combination with hardware in the processor. To avoid repetition, details are not described herein.

This application further provides a computer-readable storage medium. The computer-readable storage medium is configured to store a computer program, and the computer program is used to implement the method corresponding to the terminal device in the foregoing embodiments.

This application further provides a computer program product. The computer program product includes a computer program (which may also be referred to as code or instructions). When the computer program is run on a computer, the computer may perform the method corresponding to the terminal device shown in the foregoing embodiments.

The foregoing descriptions are merely specific implementations of this application, and are not intended to limit the protection scope of the embodiments of this application. Any variation or replacement readily figured out by a person skilled in the art within the technical scope disclosed in the embodiments of this application shall fall within the protection scope of the embodiments of this application. Therefore, the protection scope of the embodiments of this application shall be subject to the protection scope of the claims.

## Claims

1. A screen display method for a terminal device, applied to a terminal device comprising an inner display screen, an outer display screen, and a gyroscope, wherein the method comprises:
determining whether the terminal device is in a weightless state;
when the terminal device is in a weightless state, disabling the gyroscope, and stopping executing a folding angle algorithm;
re-enabling the gyroscope when the terminal device is no longer in a weightless state, and obtaining an angular velocity by using the gyroscope;
re-executing the folding angle algorithm based on the angular velocity to obtain an unfolding angle of the inner display screen; and
displaying a corresponding interface based on the unfolding angle of the inner display screen by using the inner display screen or the outer display screen.

2. The method according to claim 1, wherein the method further comprises:
after the gyroscope is disabled for first preset duration, determining whether the terminal device is still in a weightless state; and
if the gyroscope is in a weightless state, prolonging disabled duration of the gyroscope and execution stop duration of the folding angle algorithm.

3. The method according to claim 2, wherein the execution stop duration of the folding angle algorithm is second preset duration, and the second preset duration is greater than or equal to the first preset duration.

4. The method according to any one of claims 1 to 3, wherein the re-enabling the gyroscope when the terminal device is no longer in a weightless state, and obtaining an angular velocity by using the gyroscope comprises:
re-enabling the gyroscope when the terminal device is not in a weightless state and is not in an overweight state, and obtaining the angular velocity by using the gyroscope.

5. The method according to claim 4, wherein the method further comprises:
after the terminal device is not in a weightless state, determining whether the terminal device is in an overweight state; and
if the terminal device is in an overweight state, prolonging the disabled duration of the gyroscope and the execution stop duration of the folding angle algorithm.

6. The method according to claim 1 or 2, wherein the method further comprises:
executing a posture algorithm based on the unfolding angle of the inner display screen, to obtain posture information of the inner display screen; and
the displaying a corresponding interface based on the unfolding angle of the inner display screen by using the inner display screen or the outer display screen comprises:
displaying the corresponding interface based on the unfolding angle and the posture information of the inner display screen by using the inner display screen or the outer display screen.

7. The method according to any one of claims 1 to 6, wherein the determining whether the terminal device is in a weightless state comprises:
obtaining data of three coordinate axes in a three-dimensional coordinate system; and
if absolute values of differences between the data of the three coordinate axes and 0.5×g are all less than a preset value, determining that the terminal device is in a weightless state, wherein g indicates gravitational acceleration.

8. The method according to any one of claims 1 to 6, wherein the determining whether the terminal device is in a weightless state comprises:
obtaining data of three coordinate axes in a three-dimensional coordinate system; and
if the data of the three coordinate axes is all less than a first preset threshold, determining that the terminal device is in a weightless state.

9. A screen display method for a terminal device, applied to a terminal device comprising an inner display screen, an outer display screen, and a gyroscope, wherein the method comprises:
determining whether the terminal device is in a weightless state;
when the terminal device is in a weightless state, disabling the gyroscope;
re-enabling the gyroscope when the terminal device is no longer in a weightless state, and obtaining an angular velocity by using the gyroscope;
executing a folding angle algorithm based on the angular velocity to obtain an unfolding angle of the inner display screen; and
displaying a corresponding interface based on the unfolding angle of the inner display screen by using the inner display screen or the outer display screen.

10. A screen display method for a terminal device, applied to a terminal device comprising an inner display screen, an outer display screen, and a gyroscope, wherein the method comprises:
determining whether the terminal device is in a weightless state;
when the terminal device is in a weightless state, stopping executing a folding angle algorithm;
when the terminal device is no longer in a weightless state, obtaining an angular velocity by using the gyroscope;
executing the folding angle algorithm based on the angular velocity to obtain an unfolding angle of the inner display screen; and
displaying a corresponding interface based on the unfolding angle of the inner display screen by using the inner display screen or the outer display screen.

11. A screen display method for a terminal device, applied to a terminal device comprising an inner display screen, an outer display screen, and a magnetic sensor, wherein the method comprises:
obtaining a magnetic force value between the inner display screen by using the magnetic sensor;
determining posture information of the inner display screen based on the magnetic force value; and
displaying a corresponding interface based on the posture information by using the inner display screen or the outer display screen.

12. The method according to claim 11, wherein the determining posture information of the inner display screen based on the magnetic force value comprises:
when the magnetic force value is greater than or equal to a fourth preset threshold, determining that the inner display screen is in a closed state; or
when the magnetic force value is less than the fourth preset threshold, determining that the inner display screen is in an unfolded state.

13. The method according to claim 11, wherein the inner display screen is folded in a manner of inward folding or outward folding.

14. A terminal device, comprising a processor, wherein the processor is coupled to a memory, the memory is configured to store a computer program, and when the processor invokes the computer program, the terminal device is enabled to perform the method according to any one of claims 1 to 13.

15. A computer-readable storage medium, configured to store a computer program, wherein the computer program comprises instructions for implementing the method according to any one of claims 1 to 13.

16. A computer program product, wherein the computer program product comprises computer program code, and when the computer program code is run on a computer, the computer is enabled to implement the method according to any one of claims 1 to 13.
